# EUROPÄISCHE PATENTANMELDUNG

(11) **EP 1 369 604 A2**
(43) Veröffentlichungstag der Anmeldung: **10.12.2003**
(21) Anmeldenummer: 03012644.5
(22) Anmeldetag: 04.06.2003
(51) Int. Cl.: F16C 17/03

(54) **Gleitlager**

(30) Priorität: 06.06.2002 DE 10225010; 24.12.2002 DE 10260885
(71) Anmelder: Main-Metall-Giesserei Fritz Schorr GmbH & Co. KG, 66885 Altenglan (DE)
(72) Erfinder: Spiegel, Klaus, Prof. Dr. Ing., 40627 Düsseldorf (DE); Fricke, Jürgen, Prof. Dr. Ing., 40627 Düsseldorf (DE); Rodermund, Heribert, Dr. Ing., 67685 Schwedelbach (DE); Hagenhoff, Magnus, Dipl. Ing., 66869 Kusel (DE); Buhl, Wolfgang, 66885 Altenglan (DE)
(74) Vertreter: Feder, Wolf-Dietrich, Dr. Dipl.-Phys.

(57) **Zusammenfassung**

Gleitlager, bei dem sich ein rotierendes Maschinenelement (4) auf einem ruhenden Tragelement (1) über auf dem Tragelement angeordnete Kippklötze (2.1) abstützt. Die Kippklötze (2.1) besitzen an der dem Maschinenelement (4) zugewandten Seite Gleitflächen (2.11), denen Schmierstoff zugeführt wird. Die vom Maschinenelement abgewandten Rückseiten der Kippklötze (2.1) sitzen mit einem konvex oder konkav ausgebildeten Kugelflächenabschnitt (2.12) auf einem konkav oder konvex ausgebildeten Kugelflächenabschnitt (1.1) der Stützfläche des Tragelements (1) auf. Bei mindestens einem Kippklotz (2.1) des Gleitlagers ist im Kippklotz eine Drosselbohrung (6.1) angeordnet, deren eines Ende in die Gleitfläche (2.11) und deren anderes Ende in eine Druckkammer (7) einmündet, über die sich der Kippklotz (2.1) auf der Stützfläche des Tragelements (1) abstützt.

## Beschreibung

Die Erfindung betrifft ein Gleitlager mit den Merkmalen aus dem Oberbegriff des Patentanspruchs 1.

Ein Gleitlager mit diesen Merkmalen ist beispielsweise in US-A 2 137 487 beschrieben.

Flüssigkeitsgeschmierte Radial- und Axialgleitlager werden meist bei hohen Drehfrequenzen eingesetzt, beispielsweise in Turbomaschinen oder hochtourigen Getrieben, um Reibungsverluste zu mindern und um Sicherheit gegen Lagerinstabilitäten in Form von selbsterregten Schwingungen zu erreichen.

Bei den bekannten Gleitlagern stützen in üblicher Weise die Kippklötze, auch Kippsegmente oder Gleitschuhe genannt, das rotierende Maschinenelement, also entweder eine Welle beim Radiallager oder eine Spurscheibe beim Axiallager, gegen den ruhenden Teil der Maschine, also ein Tragelement, ab. Dabei ist die Einstellbarkeit der Kippklötze nach Höhe und Neigung von entscheidender Bedeutung für die Funktionstüchtigkeit und damit für die Tragfähigkeit. Durch die Führung einer Drosselbohrung durch die Kippklötze hindurch ist es möglich, die Druckfläche an der Kippklotzrückseite mit Öl zu versorgen, wodurch der Verschleiss in diesem Bereich herabgesetzt werden kann.

Der Erfindung liegt die Aufgabe zugrunde, ein Gleitlager mit den Merkmalen aus dem Oberbegriff des Patentanspruchs 1 so auszubilden, dass ein hochverschleissfestes Lager erhalten werden kann, mit sehr ruhigem Lauf und guter Dämpfung der Maschinenelementschwingungen ohne dass das Einbauspiel des Lagers besonders klein sein müsste.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Der Erfindung liegt der Gedanke zugrunde, durch eine besondere Führung des Drucköls vom Schmierspalt in den Kippklotz hinein und durch ihn hindurch in eine Druckkammer die Möglichkeit zu schaffen, hydrostatische Druckkräfte aufzubauen, mit deren Hilfe die Klötze an der Rückseite entlastet werden können, indem sie im Betrieb zeitweilig gegenüber dem Tragelement angehoben werden. Somit kann die vom Schmierfilmdruck gesteuerte Höhenzunahme elastisch vergrößert werden und ausgleichend bzw. spieleinstellend wirken.

Bei einer weiter unten näher beschriebenen Ausführungsform des erfindungsgemäßen Gleitlagers ist die Druckkammer innerhalb des Kippklotzes als Zwischenkammer angeordnet und so ausgebildet, dass der Öldruck eine elastische Ausdehnung und damit eine Vergrößerung des gesamten Kippklotzes bewirkt.

Das erfindungsgemäße Gleitlager kann sowohl als Axiallager als auch als Radiallager ausgebildet sein.

Beim Radiallager heben bei einer Anordnung der Druckkammern an der Rückseite der Kippklötze diese vom ruhenden Tragring ab, wodurch eine Radialspielverringerung des Lagers im Betrieb bewirkt wird. Befinden sich die durch die Belastung der Kippklötze eingebrachten Kräfte und die von den hydrodynamisch erzeugten Drücken bewirkten Gegenkräfte im Gleichgewicht, so bewegen sich die Kippklötze nicht radial. Ändert sich eine von ihnen, so verschiebt sich der Kippklotz in radialer Richtung. Der Kippklotz stellt sich so in einem optimalen Betriebspunkt ein. Im Gleitlager können entweder nur ein Kippklotz oder alle tragenden oder auch sämtliche Kippklötze mit dieser Möglichkeit einer hydrostatischen Zustellung ausgerüstet werden.

Beim Axiallager tritt anstelle des äußeren Tragrings eine Tragplatte, auf der sich eine umlaufende Spurscheibe über die Kippklötze abstützt. Auch hier ist es möglich, durch entsprechende Anordnung und Ausbildung der Druckkammer zu erreichen, dass im Betrieb die Kippklöt von der Tragplatte abgehoben werden, oder in bereits erwähnter Weise der Kippklotz in axialer Richtung ausgedehnt wird.

Um bei Gleitlagern günstige Bedingungen für die hydrodynamische Druckentwicklung zu erreichen, erfolgt die Konstruktion derart, dass zwischen den Gleitflächen der Kippklötze und der Gleitfläche des sich bewegenden Maschinenelements sich in Bewegungsrichtung verengende Schmierspalte auftreten.

Hierfür hat es sich als günstig erwiesen, wenn der Unterstützungspunkt des Kippklotzes auf dem Tragelement an den hydrodynamischen Druckmittelpunkt angepasst wird. Gemäß einer vorteilhaften Ausführungsform des erfindungsgemäßen Gleitlagers lässt sich dies konstruktiv beeinflussen, indem die Druckkammer gegen den Mittelpunkt des Kippklotzes in Bewegungsrichtung des Maschinenelements um einen vorgegebenen Längenbetrag zum Rand des Kippklotzes hin versetzt angeordnet ist. Dadurch verschiebt sich auch der hydrostatische Anteil der rückseitigen Unterstützung des Kippklotzes. Wenn bei einer solchen Ausbildung die Dichtungsringe, welche die Druckkammern begrenzen, an der Rückseite des Kippklotzes angeordnet sind, ist die Bewegungsrichtung des Maschinenelements, also bei einem Radiallager die Drehrichtung der Welle, fest vorgegeben.

Hier kann eine weitere Verbesserung erreicht werden, wenn bei einem bereits eingebauten Lager die Neigung der Gleitflächen der Kippklötze relativ zur Lauffläche des Maschinenelements verändert werden könnte. Hierzu ist es vorteilhaft, wenn die Druckkammer durch einen in einer ringförmigen Nut an der Vorderseite des Tragelements angeordneten Dichtungsring seitlich begrenzt ist. Wenn dann Kippklotz und Tragelement in und gegen die Bewegungsrichtung des Maschinenelements gegeneinander verschiebbar bzw. bei einem Radiallager verdrehbar ausgebildet sind, so ist es möglich, die Druck-kammern relativ zu den Kippklötzen in Bewegungsrichtung des Maschinenelements zu verschieben bzw. zu verdrehen. Eine solche Einstellung kann im eingebauten Zustand des Lagers manuell vorgenommen werden. Auf diese Weise können auch unterschiedliche Drehrichtungen des Maschinenelements berücksichtigt werden.

Bei einer weiteren vorteilhaften Ausführungsform des erfindungsgemäßen Gleitlagers wird eine automatische Einstellung der Neigung der Gleitflächen der Kippklötze relativ zur Gleitfläche des Maschinenelements bewirkt.

Bei dieser Ausführungsform sind beispielsweise durch mindestens einen Kippklotz zwei Drosselbohrungen geführt, die jeweils in eine Druckkammer einmünden, wobei die beiden Druckkammern durch Dichtungen voneinander getrennt und in Bewegungsrichtung des Maschinenelements gegeneinander versetzt angeordnet sind. Dies kann beispielsweise in der Weise geschehen, dass die Druck-kammern in Bewegungsrichtung des Maschinenelements zu beiden Seiten des Mittelpunktes des Kippklotzes angeordnet sind. Bei dieser Ausführungsform können die die Druckkammern begrenzenden Dichtungsringe entweder an der Rückseite des Kippklotzes oder an der Vorderseite des Tragelements angeordnet sein. Wie weiter unten anhand eines Ausführungsbeispiels erläutert, ist wegen der asymmetrischen Druckverteilung im Schmierfilm die Tragkraft der in Bewegungsrichtung gesehen vorderen Druckkammer geringer als die der hinteren Druckkammer. Dies bewirkt ein Drehmoment, das den Klotz gegen die Bewegungsrichtung in gewünschter Weise ankippt.

Die oben erläuterten Ausführungsformen sind sowohl auf Radiallager als auch auf Axiallager anwendbar.

Im folgenden werden anhand der beigefügten Zeichnungen Ausführungsbeispiele für Gleitlager nach der Erfindung näher erläutert.

In den Zeichnungen zeigen:
- Fig. 1: in einer stark schematisierten Darstellung einen Teil eines als Axiallager ausgebildeten Gleitlagers in einem Schnitt senkrecht durch die Spurscheibe;
- Fig. 2: das Gleitlager nach Fig. 1 in stark schemätisierter Aufsicht auf zwei Kippklötze;
- Fig. 3A: eine Aufsicht auf einen außermittig unterstützten Kippklotz eines Axiallagers mit konkavem Kugelflächenabschnitt an der Rückseite;
- Fig. 3B: einen Schnitt nach der Linie III B-III B in Fig. 3A;
- Fig. 3C u. 3D: in einer Darstellung analog Fig. 3A u. 3B einen außermittig unterstützten Kippklotz mit einem konvexen Kugelflächenabschnitt an der Rückseite;
- Fig. 3E u. 3F: in einer Darstellung analog Fig. 3A u. 3B einen mittig unterstützten Kippklotz mit konkavem Kugelflächenabschnitt an der Rückseite;
- Fig. 3G u. 3H: in einer Darstellung analog Fig. 3A u. 3B einen mittig unterstützten Kippklotz mit konvexem Kugelflächenabschnitt an der Rückseite;
- Fig. 4A u. 4B: in einer Darstellung analog Fig. 3A u. 3B einen in Aufsicht runden Kippklotz mit konkavem Kugelflächenabschnitt an der Rückseite;
- Fig. 4C u. 4D: in einer Darstellung analog Fig. 3A u. 3B einen in der Aufsicht runden Kippklotz mit konvexem Kugelflächenabschnitt an der Rückseite;
- Fig. 5A u. 5B: in einer Darstellung analog Fig. 3A u. 3B einen zweiteilig aufgebauten Kippklotz mit konkavem Kugelflächenabschnitt an der Rückseite des Stützteils;
- Fig. 5C u. 5D: in einer Darstellung analog Fig. 3A u. 3B einen zweiteilig aufgebauten Kippklotz mit konvexem Kugelflächenabschnitt an der Rückseite des Stützteils;
- Fig. 6A u. 6B: in einer Darstellung analog Fig. 3A u. 3B einen zweiteilig aufgebauten Kippklotz mit konkavem Kugelflächenabschnitt an der Rückseite des Stützteils und einer zusätzlichen Drosselbohrung im Stützteil;
- Fig. 6C u. 6D: in einer Darstellung analog Fig. 3A u. 3B einen zweiteilig aufgebauten Kippklotz mit konvexem Kugelflächenabschnitt an der Rückseite des Stützteils und einer zusätzlichen Drosselbohrung im Stützteil;
- Fig. 7A: im Schnitt quer zur Lagerachse ein als Radiallager ausgebildetes Gleitlager;
- Fig. 7B: eine Aufsicht auf das Gleitlager nach Fig. 7A senkrecht zur Achsrichtung;
- Fig. 7C: einen Axialschnitt durch das Gleitlager nach Fig. 7A;
- Fig. 8A, 8B, 8C: eine Variante dieses Radiallagers mit in Bewegungsrichtung versetzten Druckkammern;
- Fig. 9A: im Schnitt quer zur Lagerachse ein als Radiallager ausgebildetes Gleitlager mit zwei Druckkammern pro Kippklotz;
- Fig. 9B: eine Aufsicht auf das Gleitlager nach Fig. 9A senkrecht zur Achsrichtung;
- Fig. 9C: einen Axialschnitt durch das Gleitlager nach Fig. 9A;
- Fig. 9D: eine Aufsicht auf das Gleitlager gemäß Fig. 9A bei entferntem Tragring;
- Fig. 10: in gegenüber Fig. 9A vergrößerter Darstellung den unteren Abschnitt des Gleitlagers nach Fig. 9A.

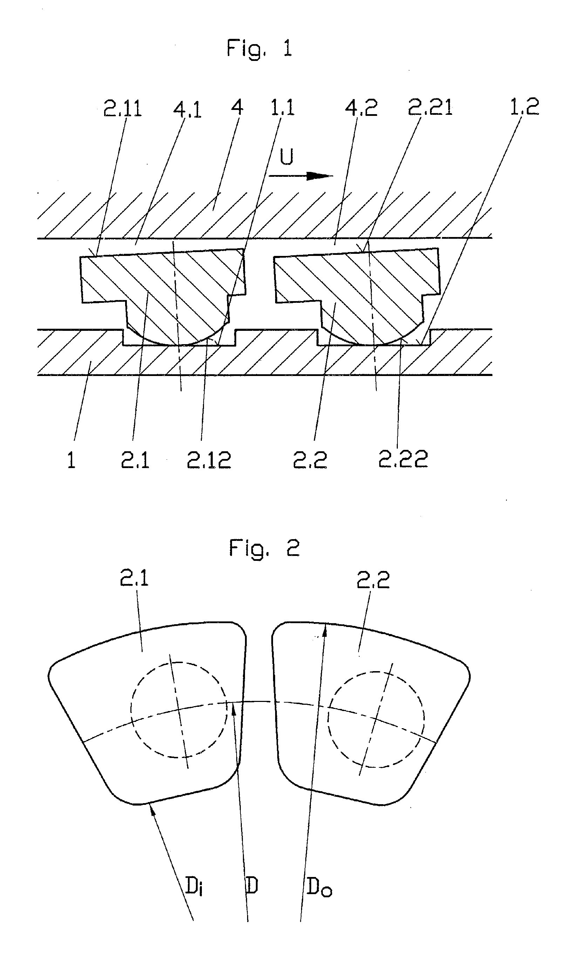

Die Fig. 1 u. 2 zeigen einen Teil eines als Axiallager aufgebauten Gleitlagers in stark schematisierter Darstellung. Eine in Pfeilrichtung U rotierende Spurscheibe 4 stützt sich über Kippklötze 2.1 und 2.2 auf einer Tragplatte 1 ab. Die Kippklötze 2.1 und 2.2 besitzen an der der Spurscheibe 4 zugewandten Seite Gleitflächen 2.11 u. 2.21. Zwischen diesen und der Oberfläche der Spurscheibe 4 bilden sich Schmierspalte 4.1 bzw. 4.2. Bei dem in Fig. 1 dargestellten Beispiel besitzen die Kippklötze an ihrer Rückseite konvex ausgebildete Kugelflächenabschnitte 2.12 bzw. 2.22, die in konkaven Kugelflächenabschnitten 1.1 bzw. 1.2 der Tragplatte 1 gelagert sind. Um ein sicheres Anstellen der Kippklötze zu ermöglichen, sind die Krümmungsradien der konvexen Kugelflächen abschnitte etwas kleiner als die Krümmungsradien der konkaven Kugelflächenabschnitte. Dies gilt auch für alle folgenden Ausführungsbeispiele.

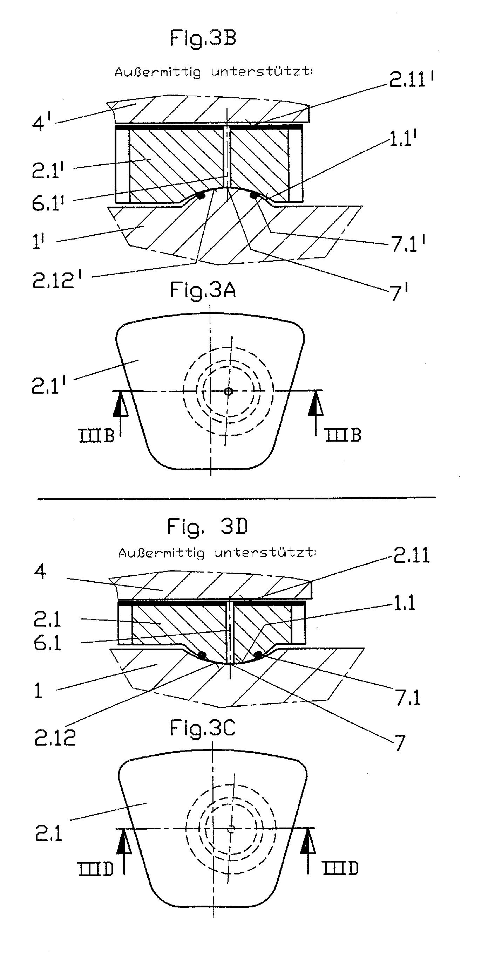

Wie aus Fig. 2 zu entnehmen, können die Kippklötze 2.1 u. 2.2 längs eines Kreisrings, dessen Mittelpunkt auf der Achse der Spurscheibe liegt, in vorgegebenen gleichen Abständen angeordnet sein.

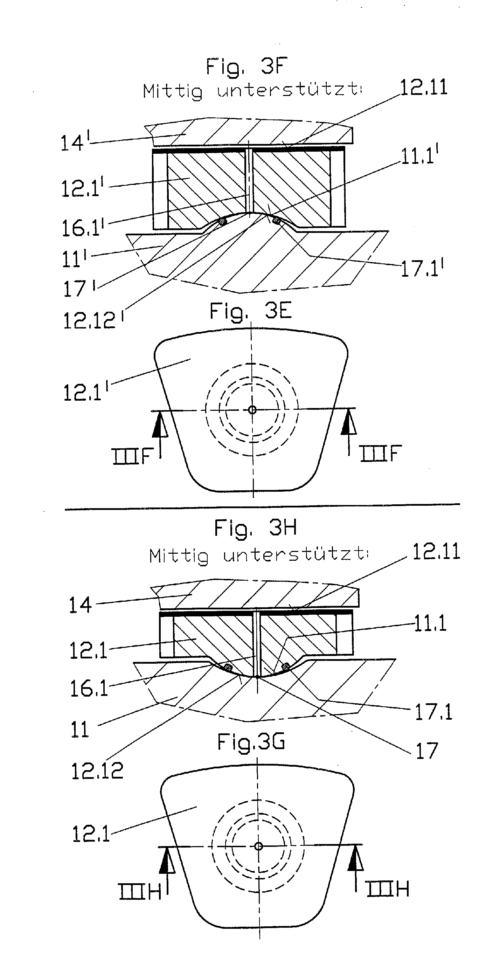

Die Kippklötze können weiterhin, wie im Folgenden gezeigt, in ihrem Umriss im Wesentlichen eckig, kreissektorförmig oder rund ausgebildet sein. Dabei kann ihre Abstützung über die Kugelflächenabschnitte auf der Tragplatte unterschiedlich erfolgen. So kann im Unterschied zur Ausbildung nach Fig. 1 der konkave Kugelflächenabschnitt auch am Kippklotz angeordnet sein, während sich der konvexe Kugelflächenabschnitt auf der Tragplatte befindet. Weiterhin kann die Abstützung durch die Kugelflächenabschnitte mittig oder außermittig erfolgen. Dies wird im Folgenden anhand der Fig. 3A bis 4D erläutert.

Die Fig. 3A bis 3D zeigen einen außermittig unterstützten Kippklotz.

Gemäß Fig. 3A u. 3B stützt sich die Spurscheibe 4' auf der Gleitfläche 2.11' des Kippklotzes 2.1' ab, und dieser ruht über einen konkaven Kugelflächenabschnitt 2.12' auf einem konvexen Kugelflächenabschnitt 1.1' der Tragfläche 1'.

Gemäß Fig. 3C u. 3D stützt sich die Spurplatte 4 auf der Gleitfläche 2.11 des Kippklotzes 2.1 ab, und dieser ruht über den konvexen Kugelflächenabschnitt 2.11 an seiner Rückseite in einem konkaven Kugelflächenabschnitt 1.1 der Tragplatte 1.

Die Fig. 3E bis 3H zeigen einen mittig unterstützten Kippklotz.

Gemäß Fig. 3E u. 3F stützt sich die Spurscheibe 14' über die Gleitfläche 12.11' des Kippklotzes 12.1' ab, und dieser ruht über den konkaven Kugelflächenabschnitt 12.12' auf einem konvexen Kugelflächenabschnitt 11.1' der Tragplatte 11'.

Gemäß Fig. 3G u. 3H stützt sich die Spurscheibe 14 über die Gleitfläche 12.11 auf dem Kippklotz 12.1 ab, und dieser ruht über den konvexen Kugelflächenabschnitt 12.12 in einem konkaven Kugelflächenabschnitt 11.1 der Tragplatte 11.

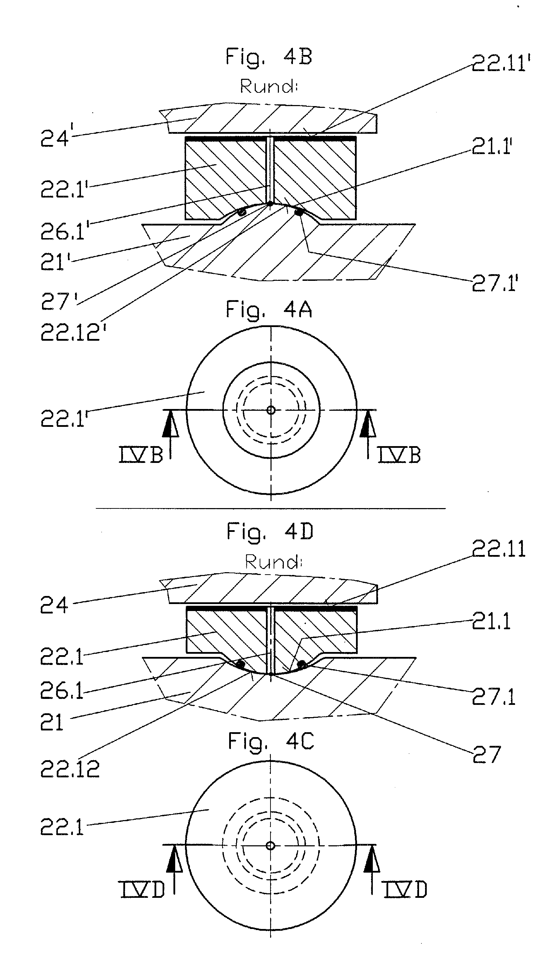

Die Fig. 4A bis 4C zeigen Kippklötze mit einem runden Umriss.

Gemäß Fig. 4A u. 4B stützt sich die Spurscheibe 24' über die Gleitfläche 22.11' auf dem Kippklotz 22.1' ab, und dieser ruht über den konkaven Kugelflächenabschnitt 22.12' auf dem konvexen Kugelflächenabschnitt 21.1' der Tragplatte 21'.

Gemäß Fig. 4C u. 4D stützt sich die Spurscheibe 24 über die Gleitfläche 22.11 auf dem Kippklotz 22.1 ab, und dieser ruht über den konvexen Kugelflächenabschnitt 22.12 in dem konkaven Kugelflächenabschnitt 21.1 der Tragplatte 21.

Bei allen Ausführungsformen der Fig. 3A bis 4D verläuft jeweils eine Drosselbohrung 6.1, 6.1', 16.1, 16.1', 26.1, 26.1' von den Gleitflächen durch den Kippklotz hindurch zu einer Druckkammer 7, 7', 17, 17', 27, 27', die an der Rückseite des Kippklotzes zwischen dem Kippklotz und der Stützfläche der Tragplatte angeordnet ist. Die Druckkammern werden durch einen in einer ringförmigen Nut an der Rückseite des Kippklotzes angeordneten Dichtungsring 7.1, 7.1', 17.1, 17.1', 27.1, 27.1' seitlich begrenzt. Wie bereits geschildert, gelangt durch diese Drosselbohrungen Drucköl jeweils vom Schmierspalt an die Rückseite der Kippklötze und verbessert deren Anstellung. Wie ebenfalls bereits geschildert, können durch die Wahl der Druckkammerabmessungen und der Durchmesser der Drosselbohrungen an den Rückseiten der Kippklötze hydrostatische Druckkräfte aufgebaut werden, durch die im Betrieb die Kippklötze von der Tragplatte abgehoben werden, wodurch das Spiel zwischen Gleitfläche und Spurscheibe verringert wird.

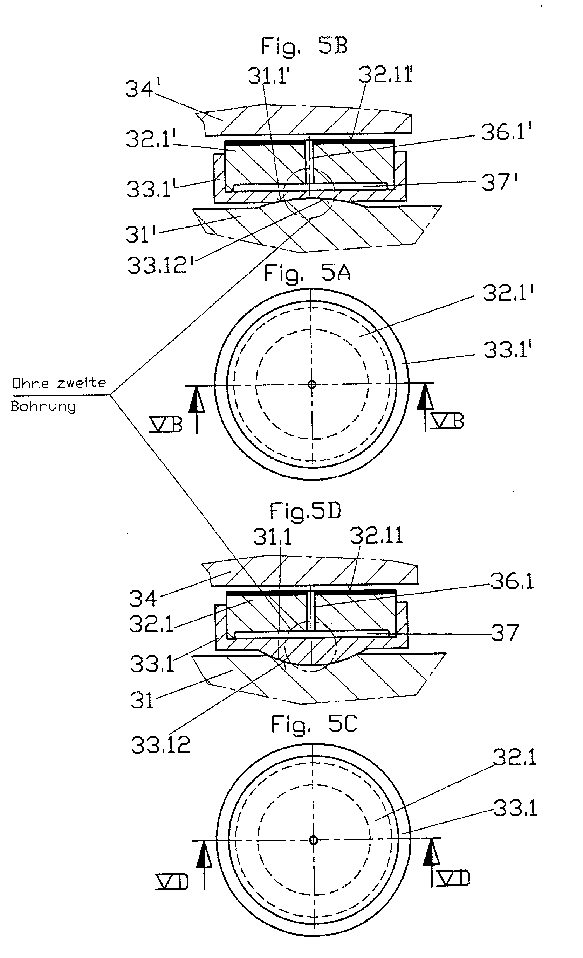

Die Fig. 5A bis 6D zeigen Ausführungsbeispiele, bei denen die Kippklötze zweiteilig ausgebildet sind. Wie beispielsweise aus Fig. 5C u. 5D zu entnehmen, besteht der Kippklotz aus einem die Gleitfläche 32.11 tragenden Gleitteil 32.1 und einem an seiner Rückseite den sich auf der Stützfläche 31.1 der Tragplatte 31 abstützenden Kugelflächenabschnitt 33.12 tragenden Stützteil 33.1. Das Gleitteil 32.1 ist in einer Ausnehmung des Stützteils 33.1 dichtend und in einer Richtung senkrecht zur Gleitfläche 32.11 bewegbar angeordnet. Zwischen dem Boden der Ausnehmung im Stützteil 33.1 und der Rückseite des Gleitteils 32.1 ist die Druckkammer 37 angeordnet, in welche ein Ende der durch das Gleitteil 32.1 hindurchgeführten Drosselbohrung 36.1 einmündet.

Im Ausführungsbeispiel nach Fig. 5C u. 5D befindet sich der konvexe Kugelflächenabschnitt 33.12 an der Rückseite des Stützteils 33.1 und ruht in einem konkaven Kugelflächenabschnitt 31.1 der Tragplatte 31.

Im Ausführungsbeispiel nach Fig. 5A u. 5B befindet sich dagegen an der Rückseite des Stützteils 33.1' ein konkaver Kugelflächenabschnitt 33.12', der auf einem konvexen Kugelflächenabschnitt 31.1' der Tragplatte 31' ruht.

Ansonsten sind diese beiden Ausführungsformen gleich aufgebaut und die sich entsprechenden Bezugsziffern mit einem " ' " versehen.

Die Druckkammern 27 u. 27' wirken als Zwischenkammern. Der in ihnen ansteigende Öldruck bewirkt eine elastische Ausdehnung und damit eine Vergrößerung des Kippklotzes in Richtung senkrecht auf die Gleitfläche 32.11 bzw. 32.11'. Somit wird das Spiel zwischen Gleitfläche und Spurscheibe verringert.

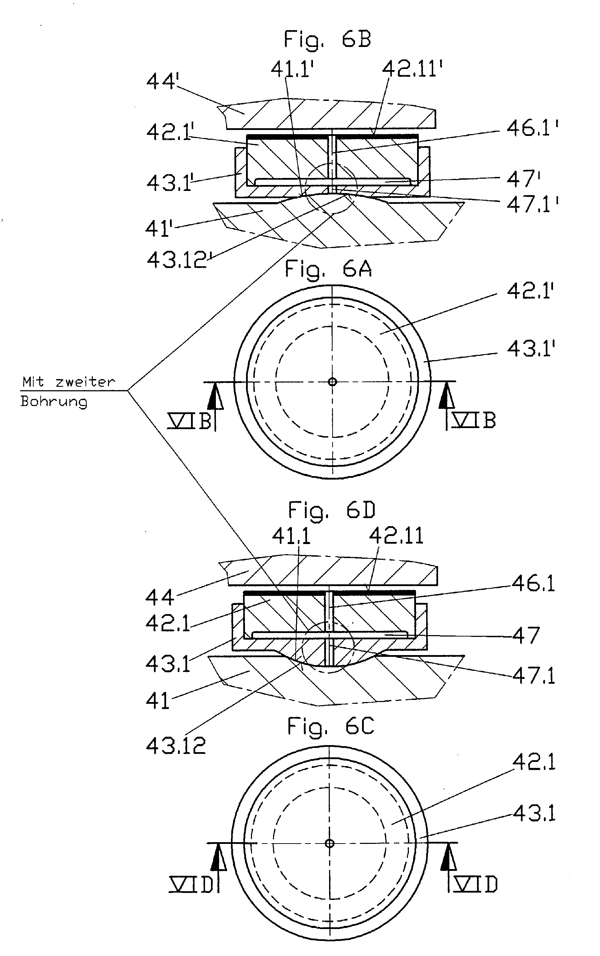

Bei den Ausführungsbeispielen nach Fig. 5A bis 5D ist das Stützteil 33.1 bzw. 33.1' ohne eine zweite Bohrung ausgeführt. Die Fig. 6A bis 6D zeigen Ausführungsbeispiele analog den Ausführungsbeispielen nach Fig. 5A bis 5D. Die Spurscheibe 44 bzw. 44' stützt sich über zweiteilig aufgebaute Kippklötze auf der Tragplatte 41 bzw. 41' ab. Der Kippklotz besitzt ein Gleitteil 42.1 bzw. 42.1' mit einer Gleitfläche 42.11 bzw. 42.11', das in einer Ausnehmung eines Stützteils 43.1 bzw. 43.1' angeordnet ist. Zwischen dem Gleitteil und dem Stützteil ist jeweils eine Druckkammer 47 bzw. 47' angeordnet, in die eine von der Gleitfläche her durch das Gleitteil geführte Drosselbohrung 46.1 bzw. 46.1' einmündet.

Bei der in Fig. 6A u. 6B dargestellten Ausführungsform befindet sich der konkave Kugelflächenabschnitt 43.12' an der Rückseite des Stützteils 43.1' und ruht auf einem konvexen Kugelflächenabschnitt 41.1' der Tragplatte 41'.

Bei der in Fig. 6C u. 6D dargestellten Ausführungsform befindet sich der konvexe Kugelflächenabschnitt 43.12 an der Rückseite des Stützteils 43.1 und ruht in einem konkaven Kugelflächenabschnitt 41.1 der Tragplatte 41.

Bei dieser Ausführungsform läuft eine weitere Drosselbohrung 47.1 bzw. 47.1' von der Druckkammer 47 bzw. 47' zur Rückseite des Stützteils 43.1 bzw. 43.1'. Auf diese Weise gelangt auch Drucköl aus der Druckkammer 47 bzw. 47' an die Rückseite des Stützteils des Kippklotzes und damit zwischen die Kugelflächenabschnitte. Der Durchmesser der Drosselbohrungen zwischen Gleitfläche und Druckkammer sollte grundsätzlich so klein sein, wie dies im Hinblick auf eine Verstopfung durch Schmutz- oder Verschleißteilchen möglich ist. Drosselbohrungsdurchmesser von weniger als 0,5 mm sollten deshalb vermieden werden.

Die Höhe der Druckkammer sollte aus Platzgründen möglichst klein gewählt werden, während ihre Ausdehnung parallel zur Gleitfläche aus der Klotzbelastung und aus dem dafür berechneten Druck bestimmt werden kann. Das Produkt aus Schmieröldruck und tragender Druckkammerfläche sollte gleich der Klotzbelastung oder etwas geringer sein.

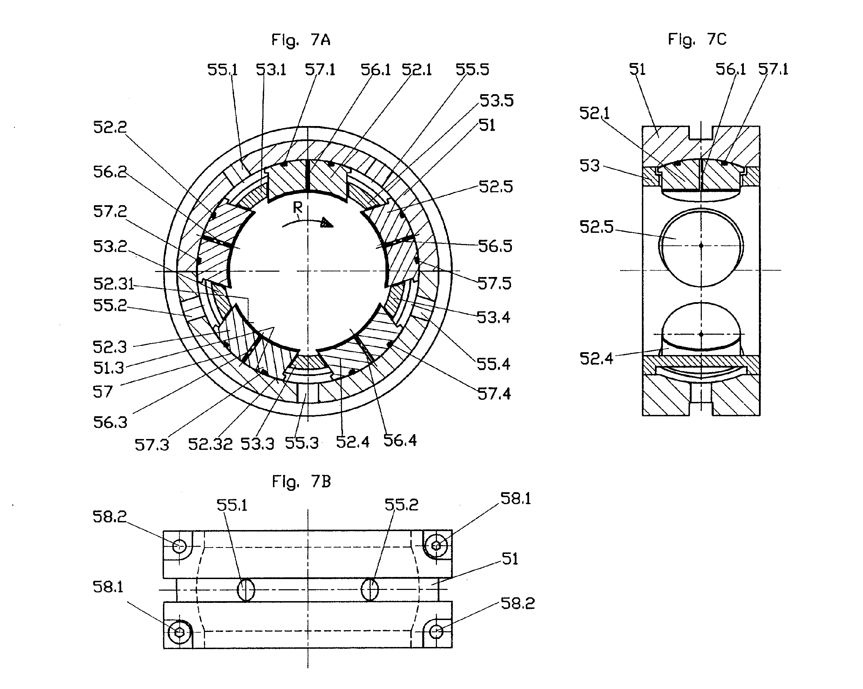

Die Fig. 7A, 7B und 7C zeigen ein als Radiallager ausgebildetes Gleitlager.

Bei diesem Radiallager ist die sich auf den Kippklötzen 52.1 bis 52.5 abstützende Welle, die in beiden Drehrichtungen R rotieren kann, in den Zeichnungen nicht mit dargestellt.

Es besitzt einen Tragring 51, auf dem sich symmetrisch ausgebildete Kippklötze 52.1 bis 52.5 über konvexe Kugelflächenabschnitte an ihrer Rückseite auf konkaven Kugelflächenabschnitten abstützen, die in der Stützfläche des Tragrings 51 angeordnet sind. In Fig. 7A sind am Beispiel des Kippklotzes 52.3 dessen Gleitfläche 52.31 sowie der konvexe Kugelflächenabschnitt 52.32 an der Rückseite des Kippklotzes und der konkave Kugelflächenabschnitt 51.3 an der Innenfläche des Tragrings 51 zu erkennen.

Die Frischölzufuhr erfolgt über Öffnungen 55.1 bis 55.5 im Tragring 51. Zwischen je zwei benachbarten Kippklötzen sind die Kippklötze in Umfangsrichtung abstützende Zwischenstücke 53.1 bis 53.5 angeordnet, die Teile eines mit dem Tragring 51 festverbundenen Führungsringes 53 sind. Tragring 51 und Führungsring 53 sind über Schraubverbindungen 58.1 und Kegelstiftverbindungen 58.2 miteinander verbunden. Das Kühlöl wird zwischen dem Tragring 51 und dem Führungsring 53 zugeführt und fließt danach durch sichelförmige Ringspalte zwischen den Öffnungen im Führungsring und den in diesem Falle kreiszylindrisch ausgebildeten Kippklötzen 52.1 bis 52.5 (siehe Fig. 7C) in die Gleitflächen der Kippklötze.

Bei allen Kippklötzen 52.1 bis 52.4 verläuft jeweils eine Drosselbohrung 56.1 bis 56.5 von der Mitte der Gleitfläche durch den Kippklotz hindurch zu einer Druckkammer 57, die jeweils an der Rückseite des Kippklotzes zwischen dem Kippklotz und der Stützfläche des Tragrings 51 angeordnet ist. Die Druck-kammern werden durch einen in einer ringförmigen Nut an der Rückseite des Kippklotzes angeordneten Dichtungsring 57.1 bis 57.5 seitlich begrenzt. Die Druckkammern liegen also jeweils symmetrisch zum Mittelpunkt der Kippklötze. Wie bereits geschildert, wird durch diese Anordnung der Druckkammern eine Radialspielverringerung des Lagers im Betrieb bewirkt.

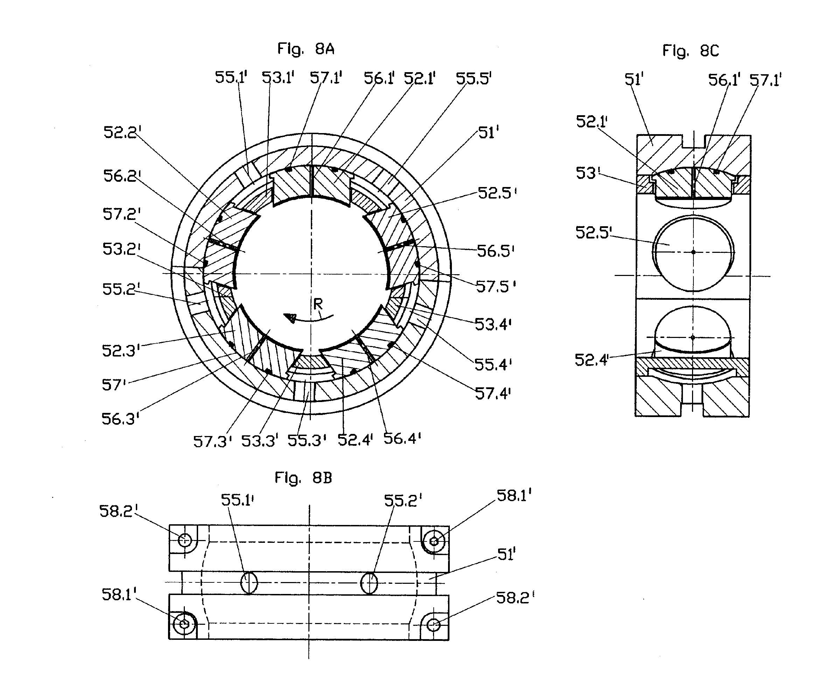

Die Fig. 8A, 8B u. 8C zeigen eine Variante des Radiallagers gem. Fig. 7A, 7B u. 7C. Da dieses Radiallager in seinem Aufbau genau dem oben erwähnten Radiallager entspricht, sind die sich entsprechenden Bauelemente mit den gleichen Bezugsziffern bezeichnet, die durch einen Apostrophstrich ergänzt sind. Das Lager wird in seinen Einzelheiten nicht mehr vollständig beschrieben, und es wird auf die entsprechende Beschreibung zu Fig. 7A, 7B u. 7C verwiesen. Ein Unterschied dieser beiden Radiallager besteht zunächst darin, dass die Druckkammern 57' durch Dichtungsringe 57.1' bis 57.5' seitlich begrenzt sind, welche nicht in ringfärmigen Nuten an der Rückseite des Kippklotzes, sondern in ringförmigen Nuten im Tragring 51' angeordnet sind. Die Drosselbohrungen 56.1' bis 56.5' verlaufen jeweils von der Mitte der Gleitfläche der Kippklötze radial nach außen. Die Zwischenstücke 53.1' bis 53.5', welche die Kippklötze 52.1' bis 52.5' in Umfangsrichtung abstützen, sind auch bei dieser Ausführungsform Teile eines Führungsringes 53'. Eine weitere Besonderheit dieser Ausführungsform besteht darin, dass Führungsring 53' und Tragring 51' gegeneinander verdrehbar sind. Dies ermöglicht es, die Lage der Druckkammern 57' gegenüber den Kippklötzen zu verändern. Wie aus Fig. 8A ersichtlich, ist im dargestellten Ausführungsbeispiel der Tragring 51' gegenüber dem Führungsring 53' derart verdreht, dass die Druckkammern 57' in Bewegungsrichtung R der nicht dargestellten Welle zum Rand des jeweiligen Kippklotzes hin verschoben sind und nicht mehr symmetrisch zu der auf der Mitte des Kippklotzes liegenden Drosselbohrung 56.1' bis 56.5' liegen. Somit kann durch Verdrehen des Tragrings 51' eine Verschiebung des Druckmittelpunktes am Rücken der Kippklötze erreicht werden. Diese Einstellung kann im eingebauten Zustand des Lagers manuell vorgenommen werden, und es können dabei auch unterschiedliche Drehrichtungen der Welle berücksichtigt werden.

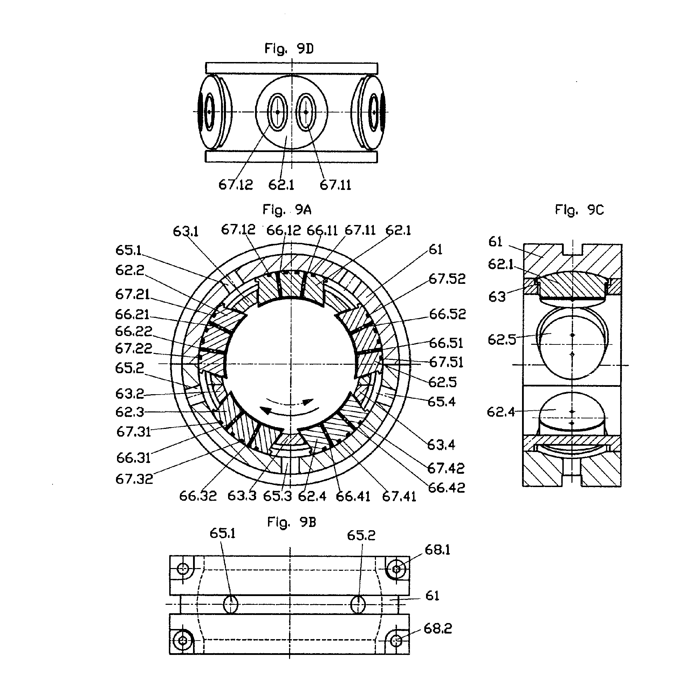

Die Fig. 9A, 9C u. 9D zeigen ein Ausflhnmgsbeispiel für ein als Radiallager ausgebildetes Gleitlager, das ohne zusätzliche Einstellungen in beiden Drehrichtungen verwendbar ist. Auch bei diesem Radiallager ist die über Kippklötze 62.1 bis 62.5 abgestützte Welle nicht dargestellt. Das Radiallager besitzt einen Tragring 61, auf dem sich die Kippklötze62.1 bis 62.5 über konvexe Kugelflächenabschnitte an ihrer Rückseite auf konkaven Kugelflächenabschnitten abstützen, die in der Stützfläche des Tragrings 61 angeordnet sind.

Die Frischölzufuhr erfolgt über Öffnungen 65,1 bis 65.5 im Tragring 61. Wie bei den vorbeschriebenen Ausführungsformen sind zwischen je zwei benachbarten Kippklötzen Zwischenstücke 63,1 bis 63.5 angeordnet, welche die Kippklötze in Umfangsrichtung abstützen und Teile eines Führungsringes 63 sind. Tragring 61 und Führungsring 63 sind über Schraubverbindungen 68.1 und Kegelstiftverbindungen 68.2 miteinander verbunden.

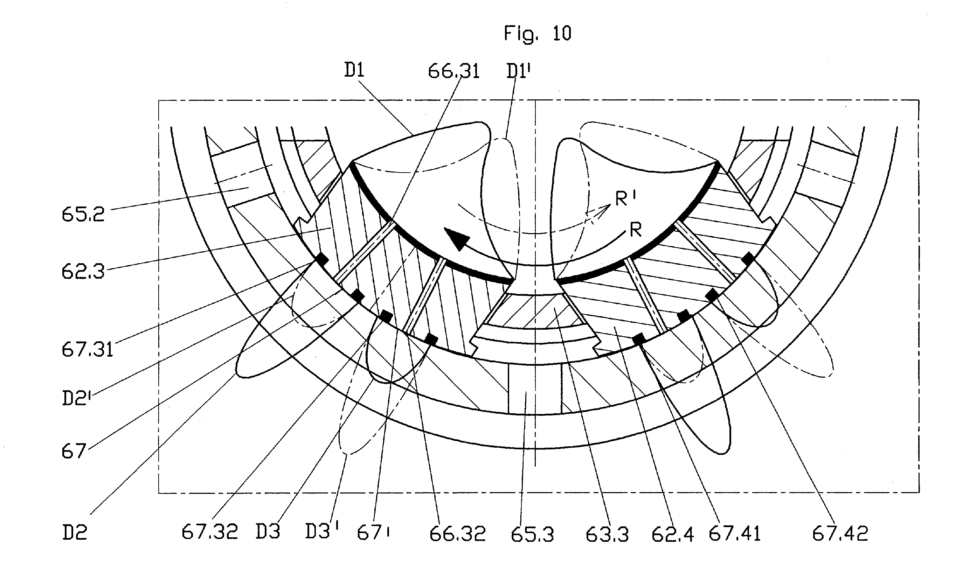

Die Kippklötze 62.1 bis 62.5 sind kreiszylindrisch ausgebildet und besitzen jeweils zwei Drosselbohrungen 66.11, 66.12 bis 66.51, 66.52. Die Drosselbohrungen laufen jeweils von einem Punkt der Gleitfläche außerhalb der Klotzmitte durch den Kippklotz hindurch zu Druckkammern 67 bzw. 67' (Fig. 10), die jeweils von in ringförmigen Nuten an der Rückseite der Kippklötze angeordneten Dichtungsringen 67.11, 67.12 bis 67.51, 67.52 begrenzt sind. Durch diese Dichtungsringe sind die Druckkammern 67 u. 67' voneinander getrennt. Weiterhin sind sie in Bewegungsrichtung der Welle gegeneinander versetzt angeordnet und zwar derart, dass sie zu beiden Seiten des Mittelpunktes de jeweiligen Kippklotzes angeordnet sind. Die genaueren Verhältnisse sind in Fig. 10 am Beispiel der Kippklötze 62.3 u. 62.4 zu entnehmen. Die beiden Drehrichtungen der Welle sind in Fig. 10 mit R und R' bezeichnet. Am Kippklotz 62.3 ist in Fig. 10 weiterhin mit der Kurve D1 der Druckverlauf an der Gleitfläche und mit den Kurven D2 und D3 der Druckverlauf an den beiden Druckkammern 67 u. 67' dargestellt. In der entgegengesetzten Drehrichtung R' ist der Druckverlauf an der Gleitfläche des Kippklotzes mit der Kurve D1' und der Druckverlauf an den beiden Druckkammern 67 u. 67' mit den Kurven D2' und D3' dargestellt.

Man erkennt, dass sich im Betrieb eine asymmetrische Druckverteilung einstellt und beispielsweise in Drehrichtung R die Tragkraft der in Drehrichtung gesehen vorderen Druckkammer 67' geringer ist als die der hinteren Druckkammer 67. Hierdurch wird ein Drehmoment bewirkt, das den Kippklotz 62.3 gegen die Drehrichtung in gewünschter Weise ankippt.

Die Ausbildung des Radiallagers nach den Fig. 9A, 9B, 9C u. 10 kann auch in der Weise geschehen, dass die Dichtungsringe in ringförmigen Nuten im Tragring angeordnet sind.

## Patentansprüche

1. Gleitlager, bei dem sich ein rotierendes Maschinenelement auf einem ruhenden Tragelement über auf dem Tragelement angeordnete, als Kippklötze ausgebildete Stützkörper abstützt, wobei mindestens ein Teil der Oberfläche des Maschinenelements auf den dem Maschinenelement zugewandten Gleitflächen der Kippklötze gleitet, denen Schmierstoff zugeführt wird, und bei dem die vom Maschinenelement abgewandten Rückseiten der Kippklötze jeweils mit einem konvex oder konkav ausgebildeten Kugelflächenabschnitt auf einem konkav oder konvex ausgebildeten Kugelflächenabschnitt der Stützfläche des Tragelements aufsitzen, wobei der Krümmungsradius des konkav ausgebildeten Kugelflächenabschnitts um einen vorgegebenen Betrag größer ist als der Krümmungsradius des konvex ausgebildeten Kugelflächenabschnitts, und bei dem in jedem der Kippklötze eine an ihrem einen Ende in die Gleitfläche mündende Drosselbohrung angeordnet ist, **dadurch gekennzeichnet, dass** bei mindestens einem der Kippklötze (2.1, 12.1, 22.1, 32.1-33.1, 42.1-43.1, 52.1-52.5, 62.1-62.5) des Gleitlagers die Drosselbohrung 6.1, 16.1, 26.1, 36.1, 46.1, 56.1-56.5, 66.11-66.52) an ihrem anderen Ende in eine Druckkammer (7, 17, 27, 37, 47, 57, 67, 67') einmündet, über die sich mindestens der die Gleitfläche (2.11, 12.11, 22.11, 32.11, 42.11, 52.31) tragende Teil (2.1, 12.1, 22.1, 32.1, 42.1, 52.1-52.5, 62.1-62.5) des Kippklotzes auf der Stützfläche des Tragelements (1, 11, 21, 31, 41, 51, 61) abstützt.

2. Gleitlager nach Anspruch 1, **dadurch gekennzeichnet, dass** die Druckkammer (7, 17, 27, 57, 67) an der Rückseite des Kippklotzes 2.1, 12.1, 22.1, 52.1-52.5, 62.1-62.5) zwischen dem Kippklotz und der Stützfläche des Tragelements (1, 11, 21, 51, 61) angeordnet ist.

3. Gleitlager nach Anspruch 2, **dadurch gekennzeichnet, dass** die Druckkammer (7, 7', 57') gegen den Mittelpunkt des Kippklotzes (2.1, 2.1', 52.1'-52.5') in Bewegungsrichtung des Maschinenelements (4, 4') um einen vorgegebenen Längenbetrag zum Rand des Kippklotzes hin versetzt angeordnet ist.

4. Gleitlager nach Anspruch 2 oder 3, **dadurch gekennzeichnet, dass** die Druckkammer (7, 17, 27, 67, 67') durch einen in einer ringförmigen Nut an der Rückseite des Kippklotzes (2.1, 12.1, 22.1, 52.1-52.5, 62.1-62.5) angeordneten Dichtungsring (7.1, 17.1, 27.1, 57.1-57.5, 67.11-67.52) seitlich begrenzt ist.

5. Gleitlager nach Anspruch 2 oder 3, **dadurch gekennzeichnet, dass** die Druckkammer (7', 17', 27') durch einen in einer ringförmigen Nut an der Vorderseite des Tragelements (1', 11', 21') angeordneten Dichtungsring (7.1', 17.1', 27.1') seitlich begrenzt ist.

6. Gleitlager nach einem der Ansprüche 1 bis 5, **dadurch gekennzeichnet, dass** Kippklotz (52.1'-52.5') und Tragelement (51') in und gegen die Bewegungsrichtung (R, R') des Maschinenelements gegeneinander verschiebbar bzw. verdrehbar ausgebildet sind.

7. Gleitlager nach Anspruch 6, **dadurch gekennzeichnet, dass** bei einem als Radiallager ausgebildeten Gleitlager, bei dem zwischen den sich auf einem Tragring (51') abstützenden Kippklötzen (52.1'-52.5') mit einem Führungsring (53') verbundene Zwischenstücke (53.1'-53.5') angeordnet sind, der Führungsring (53') relativ zum Tragring (51') verdrehbar ausgebildet ist.

8. Gleitlager nach einem der Ansprüche 1 bis 7, **dadurch gekennzeichnet, dass** mehrere Drosselbohrungen (66.11, 66.12-66.51-66.52) durch den Kippklotz (62.1-62.5) bzw. das Gleitteil geführt sind.

9. Gleitlager nach Anspruch 8, **dadurch gekennzeichnet, dass** durch mindestens einen Kippklotz (62.3) zwei Drosselbohrungen (66.31, 66.32) geführt sind, die jeweils in eine Druckkammer (67, 67') einmünden, wobei die beiden Druckkammern (67, 67') durch Dichtungen (67.31, 67.32) voneinander getrennt und in Bewegungsrichtung (R, R') des Maschinenelements gegeneinander versetzt angeordnet sind.

10. Gleitlager nach Anspruch 9, **dadurch gekennzeichnet, dass** die Druckkammer (67, 67') in Bewegungsrichtung (R, R') des Maschinenelements zu beiden Seiten des Mittelpunkts des Kippklotzes (62.3) angeordnet sind.

11. Gleitlager nach Anspruch 1, **dadurch gekennzeichnet, dass** der Kippklotz zweiteilig ausgebildet ist mit einem die Gleitfläche (32.11, 42.11) tragenden Gleitteil (32.1, 42.1) und einem an seiner Rückseite den sich auf der Stützfläche des Tragelements (31, 41) abstützenden Kugelflächenabschnitt (33.12, 43.12) tragenden Stützteil (33.1, 43.1), wobei das Gleitteil (32.1, 42.1) in einer Ausnehmung des Stützteils (33.1, 43.1) dichtend und in einer Richtung senkrecht zur Gleitfläche bewegbar angeordnet ist und zwischen dem Boden der Ausnehmung und der Rückseite des Gleitteils die Druckkammer (37, 47) angeordnet ist, in welche das andere Ende der durch das Gleitteil (32.1, 42.1) geführten Drosselbohrung (36.1, 46.1) einmündet.

12. Gleitlager nach Anspruch 11, **dadurch gekennzeichnet, dass** die Druckkammer (47) über eine durch den Boden des Stützteils (43.1) geführte Drosselbohrung (47.1) mit der Rückseite des Stützteils (43.1) im Bereich des Kugelflächenabschnitts (43.12) verbunden ist.

13. Gleitlager nach einem der Ansprüche 1 bis 12, **dadurch gekennzeichnet, dass** im Kippklotz (2.1, 12.1, 52.1-52.5) bzw. dem Gleitteil (32.1, 42.1) eine von der Mitte der Gleitfläche ausgehende Drosselbohrung (6.1, 16.1, 26.1, 36.1, 46.1, 56.1-56.5) angeordnet ist.

14. Gleitlager nach einem der Ansprüche 1 bis 12, **dadurch gekennzeichnet, dass** im Kippklotz bzw. im Gleitteil eine Drosselbohrung angeordnet ist, die von einer Stelle der Gleitfläche ausgeht, für die ein maximaler Druck rechnerisch festgestellt ist.

15. Gleitlager nach einem der Ansprüche 1 bis 14, **dadurch gekennzeichnet, dass** die Ausdehnung der Druckkammer in den Richtungen parallel zur Gleitfläche so bemessen ist, dass das Produkt aus dem Schmierfilmdruck und der tragenden Druckkammerfläche gleich der oder etwas geringer als die Kippklotzbelastung ist.
